# EUROPEAN PATENT SPECIFICATION

(11) **EP 3 499 621 B1**
(45) Date of publication and mention of the grant of the patent: **30.06.2021**
(21) Application number: 17839526.5
(22) Date of filing: 09.08.2017
(51) Int. Cl.: H01M 8/04, H01M 8/04701, H01M 8/04007, H01M 8/04014, H01M 8/04029, F28D 1/02, F28D 21/00

(54) **FUEL CELL DEVICE**
BRENNSTOFFZELLENVORRICHTUNG
DISPOSITIF DE PILE À COMBUSTIBLE

(30) Priority: 10.08.2016 JP 2016158257; 31.03.2017 JP 2017072854
(43) Date of publication of application: 19.06.2019
(73) Proprietor: Dainichi Co., Ltd., Niigata city, Niigata 950-1295 (JP); Kyocera Corporation, Kyoto-shi, Kyoto 612-8501 (JP)
(72) Inventor: YANAGIUCHI, Shintaro, Niigata city Niigata 950-1295 (JP); FUKAGAWA, Tomohiro, Niigata city Niigata 950-1295 (JP); OGURO, Hiroki, Niigata city Niigata 950-1295 (JP); HAYAKAWA, Nao, Niigata city Niigata 950-1295 (JP); KANBAYASHI, Tatsuya, Niigata city Niigata 950-1295 (JP)
(74) Representative: Viering, Jentschura & Partner mbB Patent- und Rechtsanwälte
(86) International application number: PCT/JP2017/028901
(87) International publication number: WO 2018/030458

(56) References cited:
- JP-A- 2002 332 844
- JP-A- 2006 210 053
- JP-A- 2007 287 704
- JP-A- 2013 033 676
- JP-A- 2013 243 153
- JP-A- 2015 072 090
- JP-A- 2016 090 082
- JP-A- 2016 090 082

## Description

### Technical Field

The present invention relates to a fuel cell apparatus.

### Background Art

In recent years, as next-generation energy sources, there have been proposed various fuel cell modules of the type including a cell stack, which is housed in a housing, including a plurality of stacked fuel cells capable of obtaining electric power by utilizing a fuel gas (hydrogen-containing gas) and air (oxygen-containing gas), and also fuel cell apparatuses each including such a fuel cell module housed in an exterior case.

There is another proposal as to a fuel cell apparatus including a heat storage tank, in which a heat exchanger carries out heat exchange between exhaust gas from a fuel cell module and a medium such as water to cool the exhaust gas for recovery and reuse of water contained in the exhaust gas, and also the heat recovered by the medium is utilized for the supply of hot water.

Moreover, there is a disclosure of a technique to supply a medium to a heat exchanger after lowering the temperature of the medium by a heat dissipator disposed between a heat-storage tank and the heat exchanger. For example, Patent Literature 1 discloses a construction in which an exterior case has an air inlet provided in one surface thereof and an air outlet provided in the opposite surface thereof, and, Patent Literature 2 discloses a construction in which an exterior case has an air inlet and an air outlet for a heat dissipator provided in one and the same surface thereof.

Furthermore, with regard to exhaust air flow control in a heat dissipator, for example, Patent Literatures 3 and 4 disclose a fuel cell apparatus having an air flow channel such as a duct.

Moreover, JP 2007/287704 A discloses a fuel cell system provided with a filter to remove dust in air and a plane-shaped heater integrally installed inside a package.

### Citation List

### Patent Literature

Patent Literature 1: Japanese Unexamined Patent Publication JP-A 2009-38015
Patent Literature 2: Japanese Unexamined Patent Publication JP-A 2015-72090
Patent Literature 3: Japanese Unexamined Patent Publication JP-A 2010-92775
Patent Literature 4: Japanese Unexamined Patent Publication JP-A 2016-217670

### Summary of Invention

The present invention provides a fuel cell apparatus according to claim 1. Preferred embodiments are described in the dependent claims.

### Brief Description of Drawings

Other and further objects, features, and advantages of the invention will be more explicit from the following detailed description taken with reference to the drawings wherein:
FIG. 1 is a block diagram showing the structure of an example of a fuel cell apparatus according to the present disclosure;
FIG. 2 is a perspective view showing the appearance of an example of the fuel cell apparatus according to the present disclosure;
FIG. 3 is one side view of an example of the fuel cell apparatus according to a first embodiment;
FIG. 4 is another side view of an example of the fuel cell apparatus according to the first embodiment;
FIG. 5A is an exploded perspective view showing a specific example of a heat dissipator of the first embodiment;
FIG. 5B is an exploded perspective view showing a specific example of the heat dissipator of the first embodiment;
FIG. 6A is a view schematically showing the heat dissipator of the first embodiment;
FIG. 6B is a view schematically showing the heat dissipator of the first embodiment;
FIG. 7A is an explanatory view of a structural example of a radiator duct of the first embodiment;
FIG. 7B is an explanatory view of a structural example of the radiator duct of the firs embodiment;
FIG. 8 is a side view of an example of a fuel cell apparatus according to a second embodiment;
FIG. 9 is a side view of an example of the fuel cell apparatus according to the second embodiment;
FIG. 10 is an explanatory view of a structural example of a heat dissipator of the fuel cell apparatus according to the second embodiment;
FIG. 11 is an explanatory view of another structural example of the heat dissipator of the fuel cell apparatus according to the second embodiment;
FIG. 12 is an explanatory view of another structural example of the heat dissipator of the fuel cell apparatus according to the second embodiment;
FIG. 13 is an explanatory view of another structural example of the heat dissipator of the fuel cell apparatus according to the second embodiment;
FIG. 14 is a schematic sectional view of the heat dissipator of the fuel cell apparatus shown in FIG. 13; and
FIG. 15 is a schematic sectional view of the heat dissipator of the fuel cell apparatus shown in FIG. 13.

### Description of Embodiments

Disposing a heat dissipator in a lower part of a fuel cell apparatus causes complications in maintenance operation. Thus, ease of maintenance has been demanded in a heat dissipator which is located in a fuel cell apparatus. The following describes fuel cell apparatuses according to embodiments of the invention in sequence.

### (First Embodiment)

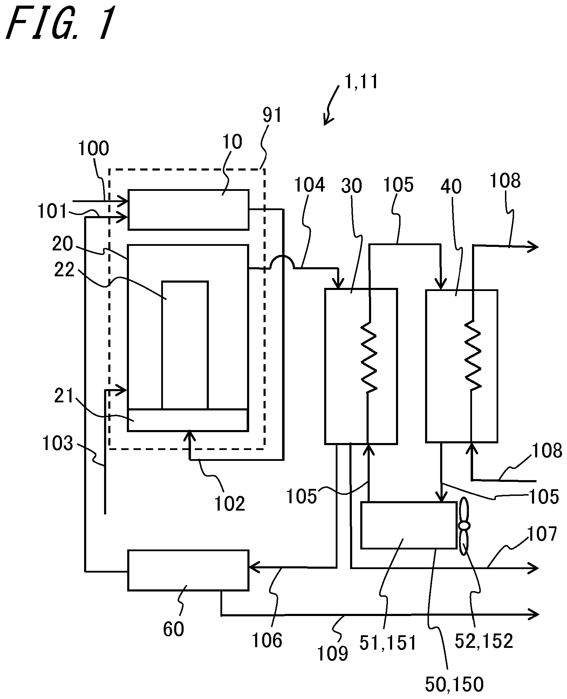

FIG. 1 is a block diagram showing the structure of an example of a fuel cell apparatus according to the present disclosure. Throughout the drawings to be hereafter referred to, the same reference numerals or symbols designate corresponding or identical constituent components. A fuel cell apparatus 1 according to the first embodiment includes a reformer 10, a cell stack device 20, a heat exchanger 30, a heat-storage tank 40, a heat dissipator 50, and a condensed water tank 60. Each such constituent device is, together with auxiliary machines which operate a fuel cell module 91 as described later, housed in an exterior case, not shown. It is not necessary to house all of the aforenamed devices in the exterior case, and for example, the heat-storage tank 40 and the heat exchanger 30 may be disposed outside the exterior case. Moreover, the fuel cell apparatus in which apart of the aforenamed devices is omitted is also possible.

A raw fuel supply pipe 100 which supplies a raw fuel and a water supply pipe 101 which supplies reformed water are connected to the reformer 10. Inside the heated reformer 10, the raw fuel and the reformed water undergo reforming reactions with each other to produce a hydrogen-containing reformed gas. The reformed gas produced in the reformer 10 is supplied to the cell stack device 20 through a reformed gas supply pipe 102.

The cell stack device 20 includes a manifold 21 and a cell stack 22. the reformed gas supplied to the cell stack device 20 is supplied from the manifold 21 into the cell stack 22. In the cell stack device 20, air (oxygen-containing gas) is introduced from an oxygen-containing gas supply member 103 outside the cell stack 22. When passing through the interior of the cell stack 22, the reformed gas reacts with this air to carry out power generation. In a region above the cell stack 22, reformed gas left unused for power generation merges with air left unused for power generation, and the resulting confluent flow is burned to produce high-temperature exhaust gas. Moreover, the reformer 10 is heated under heat resulting from the combustion.

The reformer 10 and the cell stack device 20 are brought into high-temperature conditions, and are encased by a heat-insulating material and are placed inside the exterior case as the fuel cell module 91.

Exhaust gas generated in the fuel cell module 91 is discharged from the cell stack device 20, and is then supplied to the heat exchanger 30 through an exhaust gas flow channel 104. A circulation line 105 is connected to the heat exchanger 30 to carry out heat exchange between the exhaust gas and a medium introduced in the circulation line 105. As the medium, it is possible to use a non-freezing liquid containing ethylene glycol, etc., or water. Under the heat exchange, the exhaust gas is cooled, whereas the medium is heated by the heat of the exhaust gas. Due to the cooling of the exhaust gas, water vapor contained in the exhaust gas becomes water, with consequent occurrence of vapor-liquid separation. The separated gas is discharged through an exhaust channel 107 from a gas exhaust outlet externally. The water separated by the cooling of the exhaust gas is delivered through a condensed water recovery channel 106 to the condensed water tank 60. In the condensed water tank 60, the water is purified into pure water through an ion exchange process or otherwise. The pure water is introduced into the water supply pipe 101, and is then supplied, as reformed water, to the reformer 10. Unnecessary water is ejected from a drain 109.

The medium is circulated successively through the heat-storage tank 40, the heat dissipator 50, and the heat exchanger 30 in the order named. The medium is stored in the heat-storage tank 40. After being delivered from the heat-storage tank 4 to the heat dissipator 50, the medium is cooled, and then supplied to the heat exchanger 30. In the heat exchanger 30, the medium is heated by heat exchange with the exhaust gas. The medium having an elevated temperature is returned to the heat-storage tank 40.

That is, there is formed the circulation line 105 in which the medium is circulated successively through the heat-storage tank 40, the heat dissipator 50, and the heat exchanger 30 in the order named. In other words, the heat-storage tank 40, the heat dissipator 50, and the heat exchanger 30 are disposed successively in the order named along the circulation line 105.

A hot water supply piping is introduced in the heat-storage tank 40 to utilize heated water resulting from heat exchange between water delivered from a water supply pipe 108 and the medium stored in the heat-storage tank 40 as hot water. Where water is used as the medium, the fuel cell apparatus may be configured so as to supply the medium as hot water per se.

When the amount of heat accumulated in the heat-storage tank 40 reaches the upper limit (full heat storage state), the medium is no longer able to recover the heat of the exhaust gas in the heat exchanger 30, and consequently the exhaust gas cannot be cooled sufficiently, causing a failure in the separation of moisture from the exhaust gas. As a result, a failure in condensation of moisture contained in the exhaust gas may lead to a shortage of water which is supplied to the reformer 10. Accordingly, it is necessary to decrease the temperature of the medium which is supplied to the heat exchanger 30. In the fuel cell apparatus 1 according to the present embodiment, the medium is cooled by the heat dissipator 50 and to then supplied to the heat exchanger 30. The heat dissipator 50 includes a radiator 51 and a fan 52. When the medium is at a high temperature, the fan 52 is actuated to facilitate dissipation of heat from the medium passing through the interior of the radiator 51. On the other hand, when the medium is at a low temperature, the fan 52 is left unactuated to restrain dissipation of heat from the medium in the heat dissipator 50.

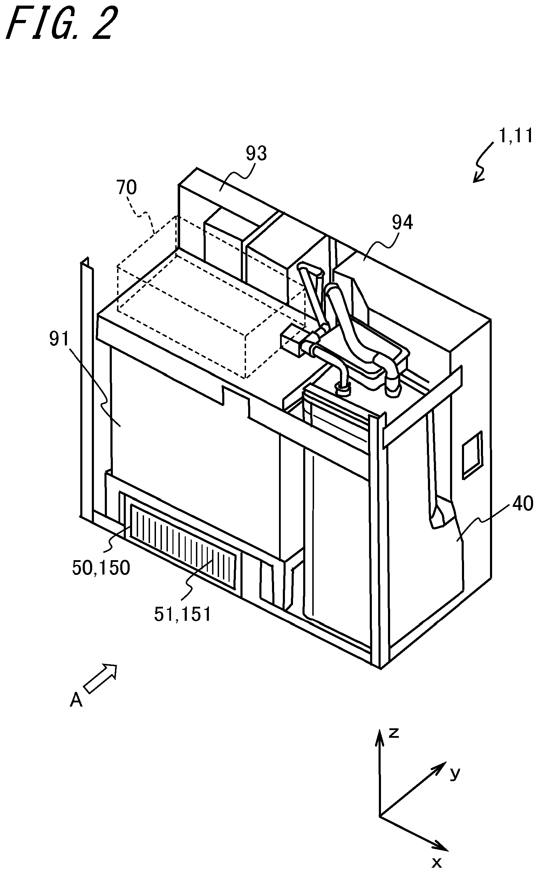

FIG. 2 is a perspective view showing the appearance of an example of the fuel cell apparatus according to the present disclosure. In FIG. 2, for purposes of explanation of the interior of the fuel cell apparatus, there is shown the fuel cell apparatus with the exterior case (more specifically, four side panels, a top panel, etc. constituting the outer frame of the fuel cell apparatus) removed. In the following description, the side panel will be also referred to simply as "side". For purposes of convenience, a face of the fuel cell apparatus as viewed in the direction of arrow A (or equivalently a y direction) in FIG. 2 is defined as a front face of the fuel cell apparatus 50. Moreover, a rightward direction as viewed from the front face is defined as an x direction, and a height direction is defined as a z direction. In the fuel cell apparatus 1, the heat dissipator 50 is disposed below the fuel cell module 91, and, the heat-storage tank 40 is disposed on a lateral side of the fuel cell module 91 and the heat dissipator 50.

Moreover, a control board 93 for controlling the fuel cell apparatus 1 is disposed on a lateral side of the fuel cell module 91, and, a power conditioner 94 for supplying electric power produced by the fuel cell module 91 to outside is disposed on a lateral side of the heat-storage tank 40. In addition, an auxiliary machine 70 such as a fuel pump is disposed above the fuel cell module 91 to operate the fuel cell module 91. One or more auxiliary machines 70 are disposed inside a space indicated by a dotted line. The description of the specific configuration of the auxiliary machine will be omitted.

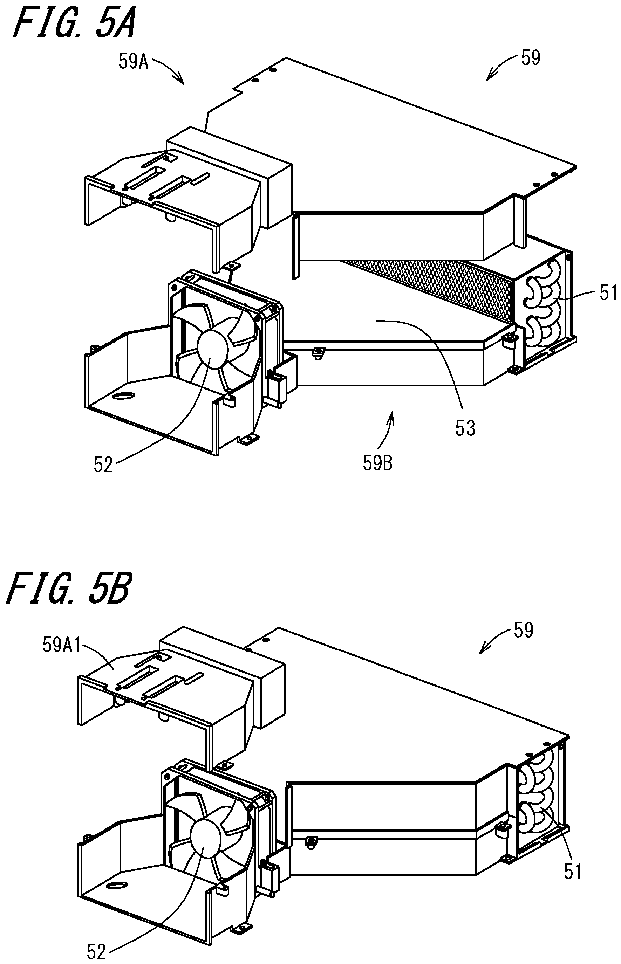

The heat dissipator 50 includes a narrow piping of the radiator 51 through which the medium passes (refer to FIGS. 5A and 5B). Disposing the heat dissipator 50 below the fuel cell module 91 enables protection of the fuel cell module 91 from trouble such as liquid leakage from the radiator. Moreover, disposing the heat dissipator 50 below the control board 93 and the power conditioner 94 enables protection of the control board 93 and the power conditioner 94 from trouble such as liquid leakage from the radiator. In addition, disposing the heat dissipator 50 below the fuel cell module 91 enables introduction of external air having a relatively low temperature, and thus can enhance the heat-dissipation efficiency.

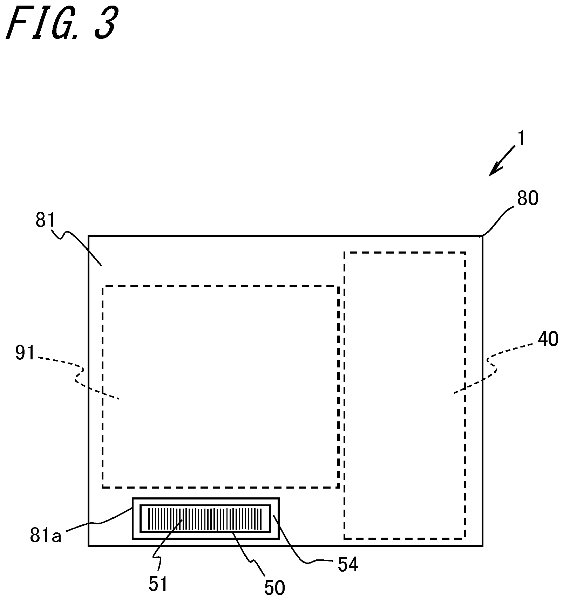

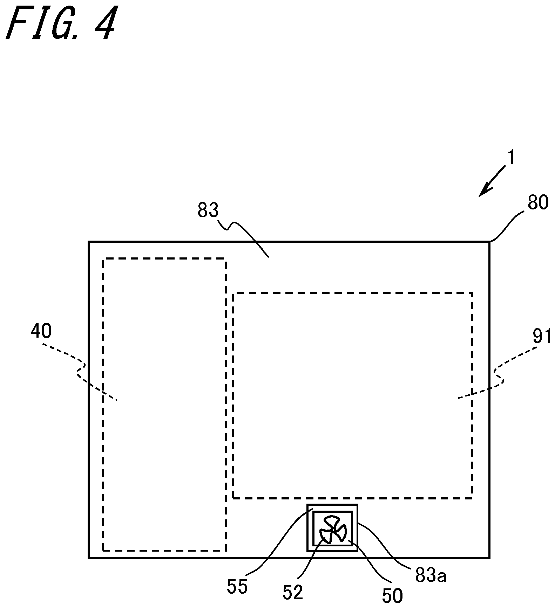

FIG. 3 is one side view of an example of the fuel cell apparatus according to the present embodiment, illustrating a side face 81 of an exterior case 80 having longitudinal sides. FIG. 4 is the other side view of an example of the fuel cell apparatus according to the present embodiment, illustrating a side face 83 of the exterior case 80 opposite to the side face 81. As shown in FIG. 3, the exterior case 80 for housing devices constituting the fuel cell apparatus 1 is shaped in a rectangular prism. In a lower side opening 81a of the side face 81 of the exterior case 80, an air inlet 54 and the radiator 51 of the heat dissipator 50 are disposed. On the other hand, as shown in FIG. 4, in a lower side opening 83a of the side face 83 of the exterior case 80, an air outlet 55 and the fan 52 of the heat dissipator 50 are disposed.

As shown in FIGS. 3 and 4, an opening area of the air inlet 54 is larger than an opening area of the air outlet 55. This makes it possible to increase the amount of air which is introduced from the air inlet 54, and thereby efficiently cool the medium flowing through the interior of the piping of the radiator 51. Moreover, forming the air inlet 54 in the large-area side face 81 allows the air inlet 54 to have a large opening area. In addition, an opening area of the opening 81a connected with the air inlet 54 can be larger than an opening area of the opening 83a connected with the air outlet 55.

As described above, the fuel cell module 91 indicated by a broken line is disposed above the heat dissipator 50 to avoid any trouble associated with the heat dissipator 50, as well as to achieve an improvement in heat-dissipation efficiency in the heat dissipator 50. The heat-storage tank 40 is disposed adjacent to the fuel cell module 91.

FIGS. 5A and 5B are each an exploded perspective view showing a specific example of the heat dissipator of the present embodiment. The heat dissipator 50 includes the radiator 51, the fan 52, an air flow channel 53, and a radiator duct (hereafter also referred to simply as "duct") 59. The duct 59, in the form of a frame body that defines the air flow channel 53, includes a plurality of separable parts. Thus, it is possible to achieve good maintainability. Moreover, for example, the duct 59 is made of resin and is thus lighter in weight than a metal-made duct. This facilitates duct servicing and maintenance.

The duct 59 shown in FIG. 5A includes an upper duct 59A and a lower duct 59B. In FIG. 5A, the upper duct 59A is illustrated as being separated from the lower duct 59B. By designing the duct 59 so that the upper duct 59A can be separated from the lower duct 59B, it is possible to achieve good maintainability.

FIG. 5B shows a case where the upper duct 59A includes a first duct 59A1 which is separable from the upper duct 59A. By designing the duct 59 so that the first duct 59A1 can be separated from the upper duct 59A, it is possible to achieve good maintainability for the fan 52, etc. located below the first duct 59A1.

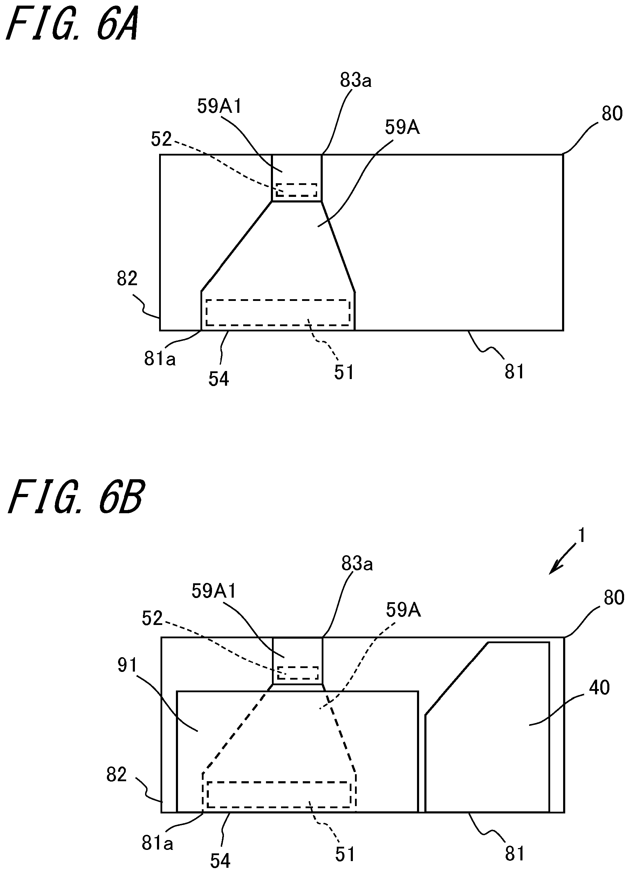

FIGS. 6A and 6B are each a view schematically showing the heat dissipator of the present embodiment. FIG. 6A is an explanatory view of a structural example of the heat dissipator of the present embodiment, illustrating the structure of the heat dissipator 50 disposed over the bottom face of the exterior case 80, as seen in a plan view.

Upon actuation of the fan 52 of the heat dissipator 50, air is introduced from the air inlet 54 connected to the opening 81a formed in the side face 81 under negative pressure, and, the medium flowing through the interior of the piping is cooled when the air passes through the radiator 51. After passing through the radiator 51, the air passes through the air flow channel 53 and the fan 52, and is eventually discharged from the air outlet 55 connected to the opening 83a formed in the side face 83.

The air flow channel 53, which is defined by the duct 59, may be communicated with other portions in the exterior case 80. In this case, by the operation of the fan 52, in addition to air present in the heat dissipator 50, air present in portions other than the heat dissipator 50 in the exterior case 80 can be discharged.

FIG. 6B is a plan view showing the positional relationship between the heat dissipator of the present embodiment and other devices. As shown in FIG. 6B, in the heat dissipator 50 as seen in a transparent plan view, the first duct 59A1 lies outside the range of the fuel cell module 91. The first duct 59A1 constitutes part of the upper duct 59A. The first duct 59A1 is separable from the upper duct 59, and it is thus possible to facilitate replacement of the fan 52 located below the first duct 59A1.

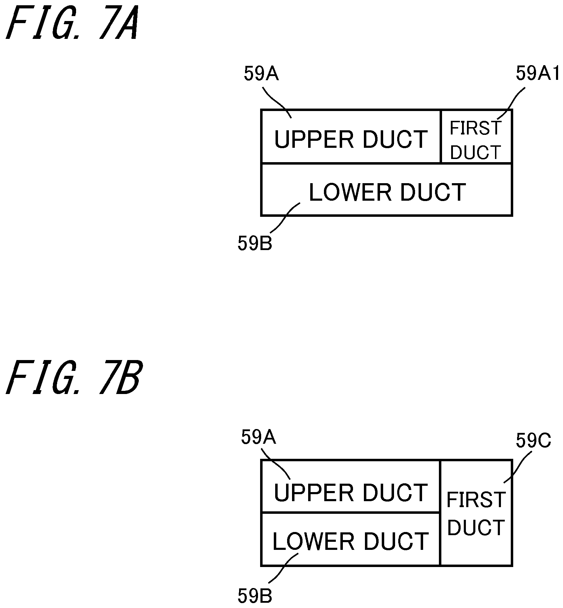

FIGS. 7A and 7B are each an explanatory view of a structural example of the radiator duct of the present embodiment. FIG. 7A shows a case where part of the upper duct 59A is constituted by the first duct 59A1 as described above with reference to FIG. 6B. FIG. 7B shows another case where a first duct 59C is disposed independently of the upper duct 59A and the lower duct 59B. In this structure, during maintenance operation, the first duct 59C can be separated completely from the upper duct 59A and the lower duct 59B, and it is thus possible to achieve good maintainability.

### (Second Embodiment)

The following describes a fuel cell apparatus 11 according to a second embodiment. Each constituent device of the fuel cell apparatus 11 is designed basically as is shown in the block diagram of FIG. 1 and the perspective view of FIG. 2, and thus overlapping descriptions will be omitted.

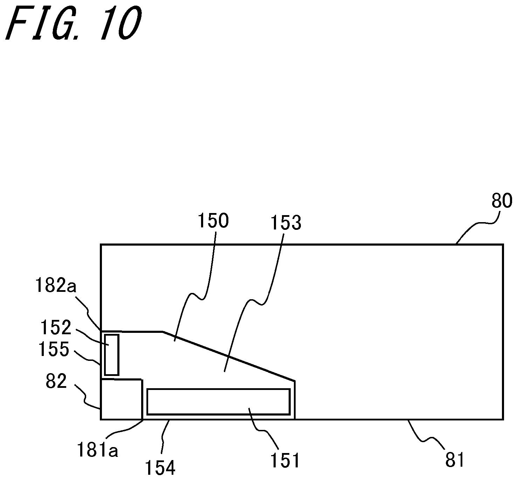

Moreover, the function of a heat dissipator 150 of the second embodiment is identical with that of the heat dissipator 50 of the foregoing first embodiment except for the shape of the air flow channel (refer to FIG. 10, for example). Thus, the detailed description of the heat dissipator 150 will be omitted.

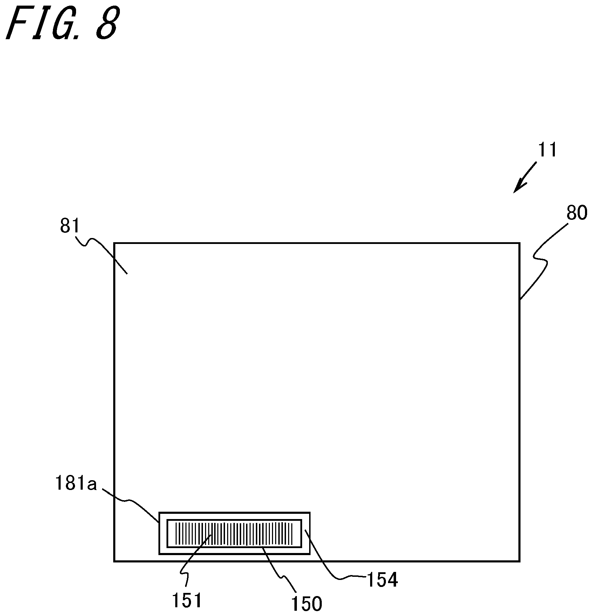

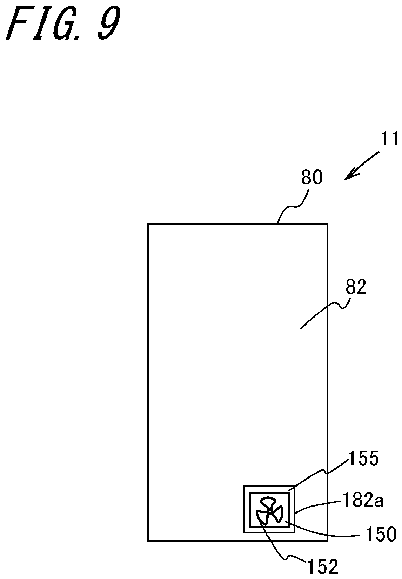

FIG. 8 is a side view of an example of the fuel cell apparatus according to the present embodiment, illustrating a side face of an exterior case 80 having longitudinal sides. FIG. 9 is a side view of an example of the fuel cell apparatus according to this embodiment, illustrating a side face of the exterior case 80 having transverse sides. The exterior case 80 for housing devices constituting the fuel cell apparatus 11 is also shaped in a rectangular prism. An area of the side face 81 of the exterior case 80 is larger than an area of the side face 82 of the exterior case 80 contiguous to the side face 81.

An air inlet 154 of the heat dissipator 150 is connected directly to an opening 181a formed in the large-area side face 81 so as to extend along the lower side of the side face 81, and, a radiator 151 is disposed in the air inlet 154.

An air outlet 155 of the heat dissipator 150 is connected directly to an opening 182a formed in the small-area side face 82 so as to extend along the lower side of the side face 82, and, a fan 152 is disposed in the air outlet 155.

The air inlet 154 and the air outlet 155 have been illustrated as being connected directly to the opening 181a and the opening 182a formed in the side face 81 and the side face 82, respectively. Also in cases where the air inlet 154 and the air outlet 155 are connected to their respective openings via air flow channels as described later, in the present embodiment, the air inlet 154 makes connection with the opening 181a formed in the side face 81, and the air outlet 155 makes connection with the opening 182a formed in the side face 82.

The relationship in opening area between the air inlet 154 and the air outlet 155 is similar to the earlier described relationship in opening area between the air inlet 54 and the air outlet 55, and will thus not be described hereinbelow.

In setting such a rectangular prism-shaped fuel cell apparatus, especially in a residential house, in most cases, the fuel cell apparatus is oriented so that the large-area side face 81 is located substantially parallel to a house wall. With the side face 81 located substantially parallel to the house wall, the contiguous side face 82 faces into open space correspondingly, thus enabling safe and effective exhaust from the air outlet 55 provided in the side face 82. Moreover, owing to the side face 82 facing into open space, maintainability can be improved.

FIG. 10 is an explanatory view of a structural example of the heat dissipator of the fuel cell apparatus according to the present embodiment, illustrating the structure of the heat dissipator 150 disposed over the bottom face of the exterior case 80, as seen in a plan view. The heat dissipator 150 includes the radiator 151, the fan 152, and an air flow channel 153.

The operation of the fan 152 is identical with that of the earlier described fan 52 except that air that has passed through the radiator 151 passes through the fan 152 along the air flow channel 153 with a 90° turn. Thus, the description of the fan 152 will be omitted.

While the air flow channel 153 is defined by, in addition to a partition wall plate, for example, the outer wall of a constituent device disposed around the heat dissipator, these wall portions are not intended to isolate the air flow channel 153 completely from other portions than the heat dissipator. Thus, the air flow channel 153 may be communicated with other portions in the exterior case 80. In this case, by the operation of the fan 152, in addition to air present in the heat dissipator 150, air present in portions other than the heat dissipator 150 in the exterior case 80 can be discharged. Where the air flow channel 153 is provided separately from other portions in the exterior case 80 for the purpose of cooling auxiliary machines, etc. mounted in the exterior case 80, an additional fan needs to be provided to ventilate the interior of the exterior case 80. In this regard, in the present embodiment, discharge of air from both of the heat dissipator 150 and other portions in the exterior case 80, as well as replenishment of fresh air into both of them, can be carried out by a single fan 152. This eliminates the need to provide such an additional fan as above described, and thus reduces the number of fans in the fuel cell apparatus, with consequent downsizing of the fuel cell apparatus.

That is, as shown in FIG. 10, in the heat dissipator 150 of the present embodiment, the air inlet 154 is provided so as to make connection with the opening 181a provided in the side face 81 which is one side face of the exterior case 80. Moreover, the air outlet 155 is provided so as to make connection with the opening 182a provided in the side face 82 which is the other face of the exterior case 80 contiguous to the side face 81. This arrangement reduces the size of the heat dissipator 150, and thus makes it possible to downsize the fuel cell apparatus.

Moreover, as shown in FIG. 10, the air inlet 154 is provided so as to make connection with the opening 181a provided in the side face 81 of the exterior case 80, and, the air outlet 155 is provided so as to make connection with the opening 182a provided in the side face 82 contiguous to the side face 81. In this case, even when the air inlet 154 faces windward, the air flow channel 153 bent in an L- or V-form constitutes resistance, and consequently external air is restrained from flowing to the interior through the air inlet 154. Consequently, since the medium flowing through the radiator 151 is not overcooled, it is possible to reduce deterioration in heat-storage performance in the heat-storage tank 40.

If the air inlet and the air outlet are provided so as to make connection with their respective openings provided in one common side face of the exterior case and to be located close to each other, for example, discharged air may flow into the air inlet once again, causing the efficiency of the heat dissipator to fall off. In this regard, by providing the air inlet 154 and the air outlet 155 so as to make connection with the opening 181a and the opening 182a, respectively, provided in different side faces contiguous to each other, the location for air introduction and the location for air discharge are separated from each other, and therefore it is possible to prevent a decrease in the cooling efficiency of the heat dissipator.

Moreover, an opening area of the air inlet 154 may be larger than an opening area of the air outlet 155. In addition, an opening area of the opening 181a connected with the air inlet 154 may be larger than an opening area of the opening 182a connected with the air outlet 155. This makes it possible to ensure the heat-dissipation capability of the radiator 151 located near the air inlet 154, and to reduce the size of the fan 152 located near the air outlet 155.

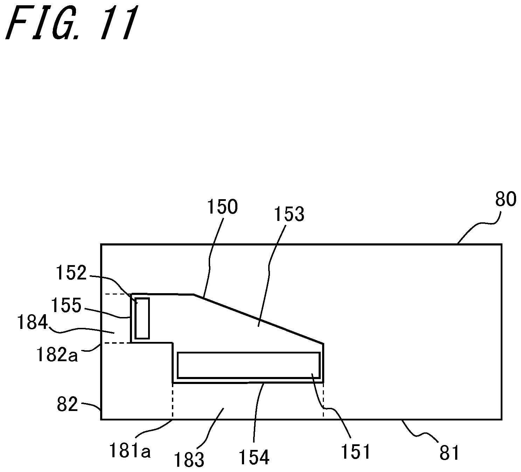

FIG. 11 is an explanatory view of another structural example of the heat dissipator of the fuel cell apparatus according to the present embodiment. Where the heat dissipator 150 is disposed on an inward side of the fuel cell apparatus, the air inlet 154 is connected, through an air passageway 183, to the opening 181a provided in the side face 81, and, the air outlet 155 is connected, through an air passageway 184, to the opening 182a provided in the side face 82. This arrangement affords the same advantageous effects as achieved by the arrangement shown in FIG. 10.

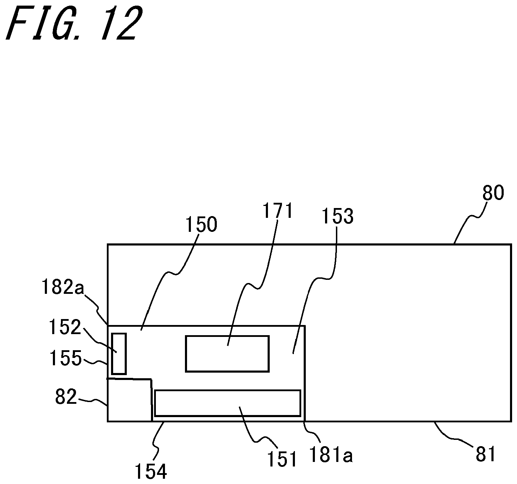

FIG. 12 is an explanatory view of still another structural example of the heat dissipator of the fuel cell apparatus according to the present embodiment. As a point of difference from the arrangement shown in FIG. 10, an auxiliary machine 171 is disposed in the air flow channel 153 of the heat dissipator 150. Some of a plurality of auxiliary machines housed in the exterior case 80 include devices which get hot easily and thus exhibit high reliability when cooled, such as pumps. At least part of the plurality of auxiliary machines is disposed in the air flow channel 153 connecting the air inlet 154 and the air outlet 155. Thereby, it is possible to cool the mounted auxiliary machine 171 render the auxiliary machine highly reliable, and enhance the reliability of the fuel cell apparatus.

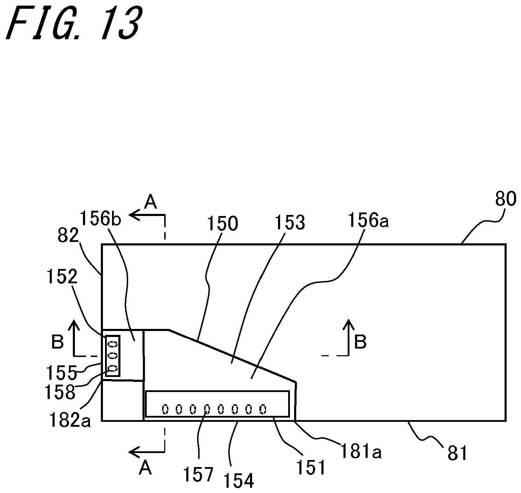

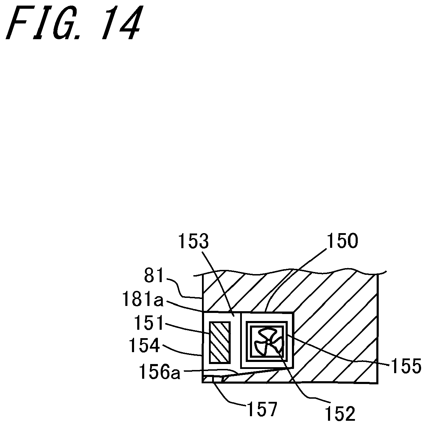

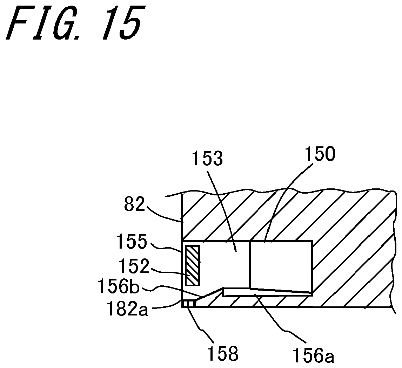

FIG. 13 is an explanatory view of yet another structural example of the heat dissipator of the fuel cell apparatus according to the present embodiment. FIG. 14 is a schematic sectional view of the heat dissipator of the fuel cell apparatus shown in FIG. 13 taken along the section line A-A of FIG. 13. Moreover, FIG. 15 is a schematic sectional view of the heat dissipator of the fuel cell apparatus shown in FIG. 13 taken along the section line B-B of FIG. 13. The present embodiment differs from the above-described fuel cell apparatus 10 shown in FIG. 10 in respect of the shape of the bottom face of the heat dissipator. In FIGS. 14 and 15, the cross-hatched area located outside the air flow channel 153 indicates a space where the fuel cell module 91, the auxiliary machine 70, etc. are disposed. The wall face of the air flow channel 153 is defined by a partition plate such as a metallic plate or part of the enclosures of devices mounted around the heat dissipator 150.

The air inlet 154 is provided so as to make connection with the opening 181a provided in the side face 81 of the exterior case 80, and, the air outlet 155 is provided so as to make connection with the opening 182a provided in the side face 82 contiguous to the side face 81. The air flow channel 153 connecting the air inlet 154 and the air outlet 155 is bent in an L-form in the exterior case 80. The bottom face of the air flow channel 153 defined by a metal-made partition plate, etc. includes a bottom face 156a opposed to the air inlet 154 and a bottom face 156b opposed to the air outlet 155.

Above the bottom face 156a opposed to the opening 181a (hereafter also referred to as the air inlet 154 in the following embodiment), the radiator 151 is disposed. The bottom face 156a slopes downwardly from an inward side of the air flow channel 153, for example, the bend of the L-shaped air flow channel 53, toward the air inlet 154. Moreover, above the bottom face 156b opposed to the opening 182a (hereafter also referred to as the air outlet 155 in the following embodiment), the fan 152 is disposed. The bottom face 156b slopes downwardly from an inward side of the air flow channel 153, for example, the bend of the L-shaped air flow channel 153, toward the air outlet 155.

In forming the bottom faces sloping downwardly toward the openings 181a and 182a, respectively, it is sufficient that each bottom face be free from any upward incline on its way to the opening. That is, for example, the bottom face may be configured to have a continuous slope, to have a slope which is partly made flat, or to have a stepped slope. Note that, where a drain hole is provided as described later, the bottom face may be configured to slope downwardly only to the location corresponding to the drain hole.

Assuming the entry of water such as rain water from the air inlet 154, since the bottom face 156a slopes downwardly toward the air inlet 154, the water present on the bottom face 156a flows toward the air inlet 154. This makes it possible to suppress the retention of water in the heat dissipator 150. Moreover, assuming the entry of water such as rain water from the air outlet 155, since the bottom face 156b slopes downwardly toward the air outlet 155, the water present on the bottom face 156b flows toward the air outlet 155. This makes it possible to suppress the retention of water in the heat dissipator 150.

The bottom face 156a may be provided with a drain hole 157 located below the radiator 151 and near the air inlet 154. Moreover, the bottom face 156b may be provided with a drain hole 158 located below the fan 152 and near the air outlet 155. The shape and number of the drain holes 157 and 158 are determined in conformance with the shapes of the air inlet 54 and the air outlet 155. Although the drain hole 157 is located near the air inlet 154, whereas the drain hole 158 is located near the air outlet 155 in the present embodiment, the drain hole 157 may be located in any position of the bottom face 156a, and the drain hole 158 may also be located in any position of the bottom face 156b.

As the advantages of formation of the drain holes 157 and 158, considering the entry of water such as rain water from the air inlet 154, the water present on the bottom face 156a can be discharged from the drain hole 157 located near the air inlet 154, and also, considering the entry of water such as rain water from the air outlet 155, the water present on the bottom face 156b can be discharged from the drain hole 158 located near the air outlet 155.

Only when the drain holes 157 and 158 are provided, the bottom face may slope downwardly from the inward side of the air flow channel 153 toward each of the drain holes 157 and 158, as well as slope downwardly from each of the air inlet 154 and the air outlet 155 to each of the drain holes 157 and 158. In this case, the water entered can be collected in each of the drain holes 157 and 158 and flow therefrom.

Thus, by providing the drain holes 157 and 158, it is possible to discharge water which has entered through the air inlet 154 or the air outlet 155 without causing the water to flow over the surface of the exterior case 80. Moreover, since the drain holes 157 and 158 are provided inside the exterior case 80 (in other words, provided in the heat dissipator 150 or the air passageways 183 and 184), even under a substantial external wind pressure, the water entered can be discharged smoothly without being influenced by the wind pressure.

In the present embodiment, there may be a case where the heat dissipator 150 is disposed in other location than the lowermost part of the exterior case 80. In such a case, a water supply pipe may be connected to the drain holes 157 and 158 to direct discharged water toward the bottom of the fuel cell apparatus 11 or away from the fuel cell apparatus 11. Moreover, there may be a case where the air inlet 154 is connected, through the air passageway 183, to the opening 181a provided in the side face 81, or the air outlet 155 is connected, through the air passageway 184, to the opening 182a provided in the side face 82. In this case, the air passageway 183 may be configured to slope downwardly toward the opening 181a, or the air passageway 184 may be configured to slope downwardly toward the opening 182a. Besides, the air passageways 183 and 184 may be provided with a drain hole.

Thus, since water which has entered the heat dissipator 150 flows toward the air inlet 154 or the air outlet 155, this avoids the retention of water in the heat dissipator 150, and thus protects the heat dissipator 150 from corrosion. Moreover, since the water which has entered can be discharged from the drain holes 157 and 158, this protects the heat dissipator 150 from corrosion. In consequence, a highly durable fuel cell apparatus is provided.

The present disclosure has been described in detail, it being understood that the present disclosure is not limited to the embodiments as described heretofore, and various changes, modifications, and improvements are possible without departing from the scope of the present disclosure.

### Reference Signs List

1, 11: Fuel cell apparatus
10: Reformer
20: Cell stack
30: Heat exchanger
40: Heat-storage tank
50, 150: Heat dissipator
51, 151: Radiator
52, 152: Fan
53, 153: Air flow channel
54, 154: Air inlet
55, 155: Air outlet
156a, 156b: Bottom face
157, 158: Drain hole
59: Radiator duct
59A: Upper duct
59B: Lower duct
59A1, 59C: First duct
60: Condensed water tank
70, 71: Auxiliary machine
80, 180: Exterior case
81, 82, 83: Side face
81a, 83a, 181a, 182a: Opening
83, 84, 183, 184: Air flow channel
91: Fuel cell module
105: Circulation line

## Claims

1. A fuel cell apparatus (1), comprising:
a fuel cell module (91);
a heat exchanger (30) which carries out heat exchange between exhaust gas from the fuel cell module (91) and a medium;
a circulation line (105) connected to the heat exchanger (30), the circulation line (105) allowing the medium to circulate the heat exchanger (30);
a heat dissipator (50) located in the circulation line (105), the heat dissipator (50) cooling the medium flowing through the heat exchanger (30); and
an exterior case (80) which houses the fuel cell module (91), the heat exchanger (30), the heat dissipator (50), and at least part of the circulation line (105),
the heat dissipator (50) provided with two openings, the heat dissipator (50) comprising at least
a duct (59) which defines an air flow channel (53) between the two openings (81a, 83a);
a fan (52) located closer to one opening (83a) of the two openings (81a, 83a) than the other opening (81a) in the air flow channel (53), the fan (52) producing flowing air; and
a radiator (51) located closer to the other opening (81a) of the two openings (81a, 83a) than the one opening (83a) in the air flow channel (53), the radiator (51) carrying out heat exchange between the medium and air flowing through an interior of the air flow channel (53),
the exterior case (80) provided with two ventilation holes to which the two openings (81a, 83a) are connected directly or via an air passageway, respectively,
the duct (59) comprising a plurality of separable parts;
wherein the plurality of separable parts of the duct (59) include at least a first duct (59A1) located close to the one opening (83a); and
wherein the plurality of separable parts of the duct (59) include, in addition to the first duct (59A1), an upper duct (59A) and a lower duct (59B) which are vertically separable from each other.

2. The fuel cell apparatus (1) according to claim 1, wherein
the heat dissipator (50) is located below the fuel cell module (91).

3. The fuel cell apparatus (1) according to claim 1 or 2, wherein
at least the first duct (59A1) lies outside a range of the fuel cell module (91), as seen in a transparent plan view of the fuel cell apparatus (1).

4. The fuel cell apparatus (1) according to any one of claims 1 to 3, wherein
the duct (59) is made of resin.

5. The fuel cell apparatus (1) according to any one of claims 1 to 4, wherein
the fan (52) operates to discharge, in addition to air introduced from the ventilation hole, air present in portions other than the heat dissipator (50) in the exterior case (80).

6. The fuel cell apparatus (1) according to any one of claims 1 to 5, wherein
a bottom face of the heat dissipator (50) or a bottom face of the air passageway slopes downwardly toward the one opening (83a) or the other opening (81a).

7. The fuel cell apparatus (1) according to any one of claims 1 to 6, wherein
a bottom face of the heat dissipator (50) or a bottom face of the air passageway is provided with a drain hole.

8. The fuel cell apparatus (1) according to any one of claims 1 to 7, wherein
the duct (59) is provided with an air outlet (55) located close to the one opening (83A), and an air inlet (54) located close to the other opening (81A), and
an opening area of the air inlet (54) is greater than an opening area of the air outlet (55).

9. The fuel cell apparatus (1) according to any one of claims 1 to 8, wherein
the ventilation hole connected to the one opening (83A) is disposed in one side face (83) of the exterior case (80), and
the ventilation hole connected to the other opening (81A) is disposed in another side face (81) of the exterior case (80) contiguous to the one side face (83).

10. The fuel cell apparatus (1) according to any one of claims 1 to 9, further comprising:
a plurality of auxiliary machines (70, 71) which operate the fuel cell module (91),
wherein at least part of the plurality of auxiliary machines (70, 71) is disposed in the air flow channel (53) .

## Patentansprüche

1. Brennstoffzellenvorrichtung (1), aufweisend:
ein Brennstoffzellenmodul (91),
einen Wärmetauscher (30), der einen Wärmetausch zwischen Abgas aus dem Brennstoffzellenmodul (91) und einem Medium durchführt,
eine Zirkulationsleitung (105), die mit dem Wärmetauscher (30) verbunden ist, wobei die Zirkulationsleitung (105) es dem Medium ermöglicht, durch den Wärmetauscher (30) zu zirkulieren,
einen Wärmeabführer (50), der in der Zirkulationsleitung (105) angeordnet ist, wobei der Wärmeabführer (50) das durch den Wärmetauscher (30) strömende Medium kühlt, und
ein Außengehäuse (80), das das Brennstoffzellenmodul (91), den Wärmetauscher (30), den Wärmeabführer (50) und zumindest einen Teil der Zirkulationsleitung (105) aufnimmt,
wobei der Wärmeabführer (50) mit zwei Öffnungen versehen ist, wobei der Wärmeabführer (50) mindestens aufweist:
einen Kanal (59), der einen Luftströmungskanal (53) zwischen den beiden Öffnungen (81a, 83a) definiert,
einen Ventilator (52), der näher bei einer Öffnung (83a) der beiden Öffnungen (81a, 83a) als bei der anderen Öffnung (81a) in dem Luftströmungskanal (53) angeordnet ist, wobei der Ventilator (52) strömende Luft erzeugt, und
einen Kühler (51), der näher bei der anderen Öffnung (81a) der beiden Öffnungen (81a, 83a) als bei der einen Öffnung (83a) in dem Luftströmungskanal (53) angeordnet ist, wobei der Kühler (51) Wärmetausch zwischen dem Medium und durch einen Innenraum des Luftströmungskanals (53) strömender Luft durchführt,
wobei das Außengehäuse (80) mit zwei Belüftungslöchern versehen ist, mit denen die beiden Öffnungen (81a, 83a) direkt oder über einen Luftdurchgang verbunden sind,
wobei der Kanal (59) eine Mehrzahl von trennbaren Teilen aufweist,
wobei die Mehrzahl von trennbaren Teilen des Kanals (59) mindestens einen ersten Kanal (59A1) aufweist, der nahe bei der einen Öffnung (83a) angeordnet ist, und
wobei die Mehrzahl von trennbaren Teilen des Kanals (59) zusätzlich zu dem ersten Kanal (59A1) einen oberen Kanal (59A) und einen unteren Kanal (59B) aufweist, die vertikal voneinander trennbar sind.

2. Brennstoffzellenvorrichtung (1) gemäß Anspruch 1, wobei
der Wärmeabführer (50) unter dem Brennstoffzellenmodul (91) angeordnet ist.

3. Brennstoffzellenvorrichtung (1) gemäß Anspruch 1 oder 2, wobei
zumindest der erste Kanal (59A1) in einer transparenten Draufsicht auf die Brennstoffzellenvorrichtung (1) gesehen außerhalb eines Bereichs des Brennstoffzellenmoduls (91) liegt.

4. Brennstoffzellenvorrichtung (1) gemäß irgendeinem der Ansprüche 1 bis 3, wobei
der Kanal (59) aus Harz hergestellt ist.

5. Brennstoffzellenvorrichtung (1) gemäß irgendeinem der Ansprüche 1 bis 4, wobei
das Gebläse (52) arbeitet, um zusätzlich zu Luft, die aus dem Belüftungsloch eingeleitet wird, Luft, die in anderen Abschnitten als dem Wärmeabführer (50) im Außengehäuse (80) vorhanden ist, abzuleiten.

6. Brennstoffzellenvorrichtung (1) gemäß irgendeinem der Ansprüche 1 bis 5, wobei
eine Unterseite des Wärmeabführers (50) oder eine Unterseite des Luftkanals nach unten in Richtung zu der einen Öffnung (83a) oder der anderen Öffnung (81a) geneigt ist.

7. Brennstoffzellenvorrichtung (1) gemäß irgendeinem der Ansprüche 1 bis 6, wobei
eine Unterseite des Wärmeabführers (50) oder eine Unterseite des Luftdurchgangs mit einem Ablaufloch versehen ist.

8. Brennstoffzellenvorrichtung (1) gemäß irgendeinem der Ansprüche 1 bis 7, wobei
der Kanal (59) mit einem Luftauslass (55), der nahe bei der einen Öffnung (83A) angeordnet ist, und einem Lufteinlass (54), der nahe bei der anderen Öffnung (81A) angeordnet ist, versehen ist, und
eine Öffnungsfläche des Lufteinlasses (54) größer als eine Öffnungsfläche des Luftauslasses (55) ist.

9. Brennstoffzellenvorrichtung (1) gemäß irgendeinem der Ansprüche 1 bis 8, wobei
das Belüftungsloch, das mit der einen Öffnung (83A) verbunden ist, in einer Seitenfläche (83) des Außengehäuses (80) angeordnet ist, und
das Belüftungsloch, das mit der anderen Öffnung (81A) verbunden ist, in einer anderen Seitenfläche (81) des Außengehäuses (80) benachbart zu der einen Seitenfläche (83) angeordnet ist.

10. Brennstoffzellenvorrichtung (1) gemäß irgendeinem der Ansprüche 1 bis 9, ferner aufweisend:
eine Mehrzahl von Hilfsmaschinen (70, 71), die das Brennstoffzellenmodul (91) betreiben,
wobei zumindest ein Teil der Mehrzahl von Hilfsmaschinen (70, 71) in dem Luftströmungskanal (53) angeordnet ist.

## Revendications

1. Dispositif de pile à combustible (1), comprenant :
un module de pile à combustible (91) ;
un échangeur de chaleur (30) qui effectue un échange de chaleur entre un gaz d'échappement du module de pile à combustible (91) et un milieu ;
une ligne de circulation (105) reliée à l'échangeur de chaleur (30), la ligne de circulation (105) permettant au milieu de circuler dans l'échangeur de chaleur (30) ;
un dissipateur de chaleur (50) situé dans la ligne de circulation (105), le dissipateur de chaleur (50) refroidissant le milieu circulant à travers l'échangeur de chaleur (30) ; et
un boîtier extérieur (80) qui abrite le module de pile à combustible (91), l'échangeur de chaleur (30), le dissipateur de chaleur (50), et au moins une partie de la ligne de circulation (105),
le dissipateur de chaleur (50) étant pourvu de deux ouvertures, le dissipateur de chaleur (50) comprenant au moins
un conduit (59) qui définit un canal de circulation d'air (53) entre les deux ouvertures (81a, 83a) ;
un ventilateur (52) situé plus près d'une ouverture (83a) des deux ouvertures (81a, 83a) que de l'autre ouverture (81a) dans le canal d'écoulement d'air (53), le ventilateur (52) produisant de l'air en écoulement ; et
un radiateur (51) situé plus près de l'autre ouverture (81a) des deux ouvertures (81a, 83a) que de ladite une ouverture (83a) dans le canal d'écoulement d'air (53), le radiateur (51) effectuant un échange de chaleur entre le milieu et l'air s'écoulant à travers un intérieur du canal d'écoulement d'air (53),
le boîtier extérieur (80) étant pourvu de deux trous de ventilation auxquels les deux ouvertures (81a, 83a) sont reliées directement ou par l'intermédiaire d'un passage d'air, respectivement,
le conduit (59) comprenant une pluralité de parties séparables ;
dans lequel la pluralité de parties séparables du conduit (59) comprend au moins un premier conduit (59A1) situé à proximité de ladite une ouverture (83a) ; et
dans lequel la pluralité de parties séparables du conduit (59) comprennent, en plus du premier conduit (59A1), un conduit supérieur (59A) et un conduit inférieur (59B) qui sont verticalement séparables l'un de l'autre.

2. Dispositif de pile à combustible (1) selon la revendication 1, dans lequel
le dissipateur de chaleur (50) est situé sous le module de pile à combustible (91).

3. Dispositif de pile à combustible (1) selon la revendication 1 ou 2, dans lequel
au moins le premier conduit (59A1) se trouve à l'extérieur d'une plage du module de pile à combustible (91), tel que vu dans une vue en plan transparente du dispositif de pile à combustible (1).

4. Dispositif de pile à combustible (1) selon l'une quelconque des revendications 1 à 3, dans lequel
le conduit (59) est réalisé en résine.

5. Dispositif de pile à combustible (1) selon l'une quelconque des revendications 1 à 4, dans lequel
le ventilateur 52) fonctionne pour évacuer, en plus de l'air introduit par le trou de ventilation, l'air présent dans des parties autres que le dissipateur de chaleur (50) dans le boîtier extérieur (80).

6. Dispositif de pile à combustible (1) selon l'une quelconque des revendications 1 à 5, dans lequel
une face inférieure du dissipateur de chaleur (50) ou une face inférieure du passage d'air est inclinée vers le bas en direction de ladite une ouverture (83a) ou de l'autre ouverture (81a).

7. Dispositif de pile à combustible (1) selon l'une quelconque des revendications 1 à 6, dans lequel
une face inférieure du dissipateur de chaleur (50) ou une face inférieure du passage d'air est pourvue d'un trou de drainage.

8. Dispositif de pile à combustible (1) selon l'une quelconque des revendications 1 à 7,
dans lequel le conduit (59) est pourvu d'une sortie d'air (55) située à proximité de ladite une ouverture (83A), et d'une entrée d'air (54) située à proximité de l'autre ouverture (81A), et
une surface d'ouverture de l'entrée d'air (54) est supérieure à une surface d'ouverture de la sortie d'air (55).

9. Dispositif de pile à combustible (1) selon l'une quelconque des revendications 1 à 8, dans lequel
le trou de ventilation relié à ladite une ouverture (83A) est disposé dans une face latérale (83) du boîtier extérieur (80), et
le trou de ventilation relié à l'autre ouverture (81A) est disposé dans une autre face latérale (81) du boîtier extérieur (80) contiguë à ladite une face latérale (83) .

10. Dispositif de pile à combustible (1) selon l'une quelconque des revendications 1 à 9, comprenant en outre :
une pluralité de machines auxiliaires (70, 71) qui font fonctionner le module de pile à combustible (91),
dans lequel au moins une partie de la pluralité de machines auxiliaires (70, 71) est disposée dans le canal d'écoulement d'air.
